Europäisches Patentamt

European Patent Office

Office européen des brevets

(11) Veröffentlichungsnummer : **0 156 826**
**B1**

(12) EUROPÄISCHE PATENTSCHRIFT

(45) Veröffentlichungstag der Patentschrift :
09.11.88

(51) Int. Cl.⁴ : **H 04 R 3/00**, H 04 B 1/46

(21) Anmeldenummer : 84903275.0

(22) Anmeldetag : 11.09.84

(86) Internationale Anmeldenummer :
PCT/CH 84/00142

(87) Internationale Veröffentlichungsnummer :
WO/8501411 (28.03.85 Gazette 85/08)

(54) EINRICHTUNG ZUR SPRACHÜBERTRAGUNG.

(30) Priorität : 14.09.83 CH 5006/83

(43) Veröffentlichungstag der Anmeldung :
09.10.85 Patentblatt 85/41

(45) Bekanntmachung des Hinweises auf die Patenterteilung : 09.11.88 Patentblatt 88/45

(84) Benannte Vertragsstaaten :
AT CH DE FR GB LI SE

(56) Entgegenhaltungen :
DE-A- 2 849 938
DE-A- 2 931 604
FR-A- 2 305 909
GB-A- 2 001 220
US-A- 3 814 856
US-A- 3 962 553
US-A- 4 215 421

(73) Patentinhaber : Peiker, Andreas
Terracinaweg 5 Postfach 20 55
D-6380 Bad Homburg v.d. Höhe (DE)

(72) Erfinder : FÖRDERER, Wolfgang
Am Hang
D-6380 Bad Homburg v. d. Höhe (DE)

(74) Vertreter : Keller, René, Dr. et al
Patentanwälte Hartmut Keller, Dr. René Keller Postfach 12
CH-3000 Bern 7 (CH)

## Beschreibung

Die Erfindung betrifft eine Einrichtung zur Sprachübertragung gemäss dem Oberbegriff des Patentanspruchs 1.

Eine Einrichtung dieser Art ist aus der FR-A 2 305 909 bekannt. Die bekannte Einrichtung ist ein sprachgesteuerter Schalter, der selbsttätig schliesst, sobald am ersten Mikrofon gesprochen wird und deshalb die Spannung am Ausgang eines die Vergleichsschaltung bildenden Differenzverstärkers grösser als der Schwellwert eines Schwellwert-Glieds ist. Dem Differenzverstärker vorgeschaltete logarithmische Verstärker sorgen dafür, dass die Spannung am Differenzverstärkerausgang unabhängig von der Sprechschallintensität ist. Der Benutzer eines solchen sprachgesteuerten Schalters kann vor allem bei auftretendem Störschall nicht beurteilen, ob er laut genug spricht, um vom Gesprächspartner verstanden zu werden. Und er kann — bei einer Freisprecheinrichtung — auch nicht beurteilen, ob er sowohl laut genug als auch in einem ausreichend kleinen Abstand vom Mikrofon, und im Falle eines Richtmikrofons, in der richtigen Richtung spricht.

Aus der DE-A 2 931 604 ist eine störgeräuschkompensierte Mikrofonschaltung bekannt. Ein Doppelmikrofon ist an die beiden gegenpoligen Eingänge eines Mikrofonverstärkers angeschlossen, wobei zur Störkompensation am einen Eingang ein Potentiometer vorgesehen ist. Der Verstärkerausgang ist mit einem Geräuschindikator verbunden, der das zu kompensierende Störgeräusch optisch oder akustisch anzeigt. Der Benutzer stellt das Potentiometer so ein, dass der Geräuschindikator möglichst kein Geräusch mehr anzeigt.

Aus der US-A 3 814 856 ist eine für Theater bestimmte Lautsprecheranlage mit mehreren Nutzschallmikrofonen und mindestens einem Störschallmikrofon bekannt. Für jedes Nutzschallmikrofon ist eine Vergleichsschaltung vorgesehen, die den Nutzschallpegel mit dem durch ein einstellbares Schwellwertglied regulierbaren Störschallpegel des Störschallmikrofons vergleicht. Ueberschreitet der Nutzschallpegel den Störschallpegel, so wird das Mikrofon an die Lautsprecheranlage geschaltet. Eine Leuchtdiode zeigt an, ob das Mikrofon durchgeschaltet ist. Sie dient dem Servicepersonal dazu, das Schwellwertglied bei der Installation der Anlage im Theater geeignet einzustellen.

Eine optimale Störgeräuschkompensation ist praktisch nur bei gleichbleibenden Störschallverhältnissen möglich. Bei stark und vor allem rasch änderndem Störschall und während des Sprechens ist eine Kompensation kaum möglich, zumal der Sprecher sich auf seine Rede und im Sprechfunk (z. B. bei einem Feuerwehr- oder Polizeieinsatz) auf die Beobachtung seiner Umgebung konzentrieren muss.

Die Erfindung, wie sie in den Ansprüchen gekennzeichnet ist, löst die Aufgabe, eine Einrichtung der eingangs genannten Art zu schaffen, die dem Benutzer während des Sprechens in einfacher, keine besondere Aufmerksamkeit erfordernden Weise stets zuverlässig anzeigt, ob er in Bezug auf die jeweils auftretenden Störgeräusche laut genug und in ausreichend kleinem Abstand und in der richtigen Richtung zum Mikrofon spricht, um die erforderliche Sprachverständlichkeit zu gewährleisten.

Die erfindungsgemässe Einrichtung kann eine oder eine von mehreren Einrichtungen einer Sprache nur in einer Richtung übertragenden Anlage, z. B. einer Konferenzanlage sein. Sie kann weiter eine Einrichtung einer im Duplexbetrieb arbeitende Gegensprechanlage z. B. einer Fernsprechanlage, insbesondere für Frei-Hören-und-Sprechen, oder einer Wechselsprechanlage sein, wobei es nicht auf die Art des Uebertragungskanals ankommt und die übertragene Sprache z. B. nach einem Sprachanalysator zur Eingabe von Daten in eine Datenverarbeitungsmaschine oder in eine Steuervorrichtung dienen kann.

Die durch die Erfindung erreichten Vorteile sind im wesentlichen darin zu sehen, dass die Verständlichkeit der übertragenen Sprache jederzeit, insbesondere auch bei unerwartet auftretendem oder zunehmendem Störschall bis zu der Grenze gewährleistet ist, die durch die Uebertragungsanlage und deren Benutzer gegeben sind. Das Signal kann ein optisches, z. B. Lichtsignal oder ein akustisches Signal sein ; es zeigt dem Benutzer der Einrichtung auch bei Nebengeräuschen und bei Nachhall jederzeit an, ob er laut genug, beim Freisprechen auch in hinreichend kleinem Abstand vom Mikrofon und im Falle eines Richtmikrofons auch in der richtigen Richtung spricht, wobei Aenderungen von Nebengeräuschen dauernd selbsttätig berücksichtigt werden. Im Falle eines akustischen Signals kann der Benutzer während des Sprechens seine Umgebung beobachten oder Schriftstücke benutzen. Hat die Einrichtung einen Hörer oder Lautsprecher, so dient dieser zweckmässig zusammen mit einem Tonfrequenzgenerator als akustischer Signalgeber. Dabei kann der Signalstrom in Abhängigkeit von der Störschallstärke so geregelt werden, dass das Signal trotz Störschall erkennbar bleibt.

Weitere Vorteile werden erzielt, wenn zusammen mit dem Signalgeber ein Schaltglied betätigt und während der Dauer des Signals im betätigten Zustand gehalten wird. Das Schaltglied kann ein Schalter sein, der z. B. in einer Konferenzanlage den Sprechkanal jedes Teilnehmers nur einschaltet und im eingeschalteten Zustand hält, wenn und solange dieser Teilnehmer spricht. Dabei wird weniger Störspannung an den Verstärker, an den alle Teilnehmer angeschlossen sind, übertragen, weil die Einrichtungen aller nicht sprechender Teilnehmer abgeschaltet sind, und die Neigung zu einer akustischen Rückkopplung ist kleiner, weil nicht alle Einrichtungen sondern nur die des jeweils Sprechenden im Rückkopplungsweg liegt. Dabei kann das Schaltglied auch so ausgeführt werden, dass, während ein Teilnehmer spricht, die Sprechkanäle der anderen oder bestimmter anderer Teilnehmer nicht eingeschaltet werden können. Die Verzögerungsmittel verhindern, dass der jeweils sprechende Teilnehmer im Falle einer kurzen Sprechpause abgeschaltet wird. Damit der Teilnehmer nicht gegen seinen Willen plötzlich abgeschaltet wird z. B., wenn er eine Sprechpause über die Verzögerungszeit hinaus verlängert, wegen angestiegener Störlautstärke nicht mehr genug laut spricht oder versehentlich seinen Abstand vom Mikrofon vergrössert oder die erforderliche Sprechrichtung zu weit verlassen hat, ist vorgesehen, ihm das bevorstehende Abschalten seiner Einrichtung durch Aenderung, z. B. periodische Unterbrechung des Signals oder durch ein anderes Signal anzuzeigen, damit er rechtzeitig weiter, ggf. lauter sprechen, seinen Abstand vom Mikrofon verkleinern, die Sprechrichtung verbessern oder, wenn er nicht weitersprechen will, diese Anzeige unbeachtet lassen kann, woraufhin seine Einrichtung selbsttätig abgeschaltet wird. Durch den selbsttätigen Schaltvorgang werden die Nachteile manuell zu betätigender Schaltvorrichtungen vermieden. Der Benutzer braucht, während er spricht, nicht einen Druckknopf niedergedrückt zu halten, er hat beide Hände frei und kann z. B. in einem Schriftstück blättern. Er kann nicht andere Teilnehmer versehentlich dadurch blockieren, dass er vergisst, einen Schalter nach dem Sprechen umzuschalten oder z. B. ein Buch, durch das er einen Druckknopf niedergedrückt hält wieder wegzunehmen. Auch kann der Druckknopf nicht durch ein darauf gelegtes Buch versehentlich betätigt werden. Diese Vorteile sind besonders auch bei Wechselsprechanlagen erheblich, bei denen solche Versehen die Anlage praktisch ausser Betrieb setzen, weil der Uebertragungskanal für die Gegenrichtung gesperrt bleibt. Wenn die Einrichtung eine Wechselsprecheinrichtung ist, wird nämlich das Schaltglied zweckmässig so ausgebildet, dass es von Hören auf Sprechen umschaltet und wieder zurückschaltet, im Falle eines Funk-Sprechgerätes von Empfangen auf Senden und umgekehrt schaltet. Dabei ist z. B. im Polizeieinsatz die selbsttätige Umschaltung und Anpassung an starke Störschalländerungen sowie die Eigenschaft besonders vorteilhaft, dass trotz selbsttätiger Umschaltung auch sehr starker Störschall unter keinen Umständen einen unerwünschten Schaltvorgang auslösen kann. Dabei kommt der Vorteil der selbsttätigen Umschaltung besonders zur Geltung, wenn ein vom Benutzer getragener Helm mit einer eingebauten Hörsprechgarnitur ausgerüstet ist, wie z. B. für Polizeieinsatz und bei der Feuerwehr üblich, ober wenn die Einrichtung eine Freisprecheinrichtung ist, wobei der Benutzer beide Hände frei hat.

Vorteilhaft ist das Signal z. B. für Benutzer transportabler Telefonstationen mit drahtloser Uebertragung, z. B. zur Verwendung in einem Kraftfahrzeug, weil es dem Benutzer ermöglicht, ständig dem Verkehrslärm entsprechend laut zu sprechen, wobei er im Falle eines akustischen Signals das Verkehrsgeschehen im Blickfeld behalten kann und im Falle einer Freisprecheinrichtung beide Hände zur Fahrzeugbedienung frei hat. Dabei ist gerade beim Freisprechen eine ausreichende Sprachverständlichkeit nur erreichbar, wenn stets entsprechend dem jeweiligen Verkehrslärm laut genug gesprochen wird. Bei einer solchen Einrichtung kann vorgesehen werden, dass dann wenn die Störschallstärke einen Wert erreicht, bei dem eine Verständigung nicht mehr erzielbar ist, an Stelle des Signals ein für diesen Fall vorgesehenes, besonderes Signal gegeben wird, das dem Benutzer empfiehlt, die Fahrzeugfenster zu schliessen oder das Schliessen der Fenster selbsttätig auslöst, und, wenn der Störschall trotzdem noch zu hoch ist, dem Benutzer nahelegt, sich eines zur wahlweisen Benutzung vorgesehenen Handapparates zu bedienen. Gewünschtenfalls könnte dieses besondere Signal auch eine Umschaltung von der Freisprecheinrichtung zum Handapparat auslösen. Dabei kann durch einen Umschalter, der bei von seiner Halterung gehaltenem Handapparat in der einen und bei abgenommenem Handapparat in der anderen Stellung ist, erreicht werden, dass das Mikrofon des Handapparats beim Freisprechen als das überwiegend auf Störschall ansprechende, zweite Mikrofon verwendet wird.

Indem die Verstärkungsgrade der Mikrofonverstärker bei den gegebenen Empfindlichkeiten der Mikrofone so bemessen sind, dass die Eingangsspannungen der Vergleichsschaltung bei einem für die Sprachverständlichkeit ausreichenden Verhältnis der Schallstärke am ersten Mikrofon zur Schallstärke am zweiten Mikrofon annähernd gleich sind, und die Vergleichsschaltung das Ausgangssignal abgibt, wenn die Spannung am dem ersten Mikrofon zugeordneten Eingang die Spannung am dem zweiten Mikrofon zugeordneten Eingang überschreitet, wird erreicht, dass die Vergleichsschaltung beim Ueberschreiten des Verhältnisses der Sprechschallspannung zur Störschallspannung, d. h. der Differenz der entsprechenden Schallpegel (dB) anspricht, welche für die Verständlichkeit der übertragenen Sprache erforderlich ist.

Im folgenden wird die Erfindung anhand von lediglich einen ausführungsweg darstellender Zeichnungen in ihrer Anwendung bei einem Funksprechgerät für abwechselndes Senden und Empfangen beispielsweise näher erläutert. Es zeigen :

Fig. 1 das Blockschaltbild eines Teiles eines Funksprechgerätes mit einer erfindungsgemässen Fernsprecheinrichtung und

Fig. 2 Signale zur Erläuterung der Wirkungsweise der Einrichtung von Fig. 1.

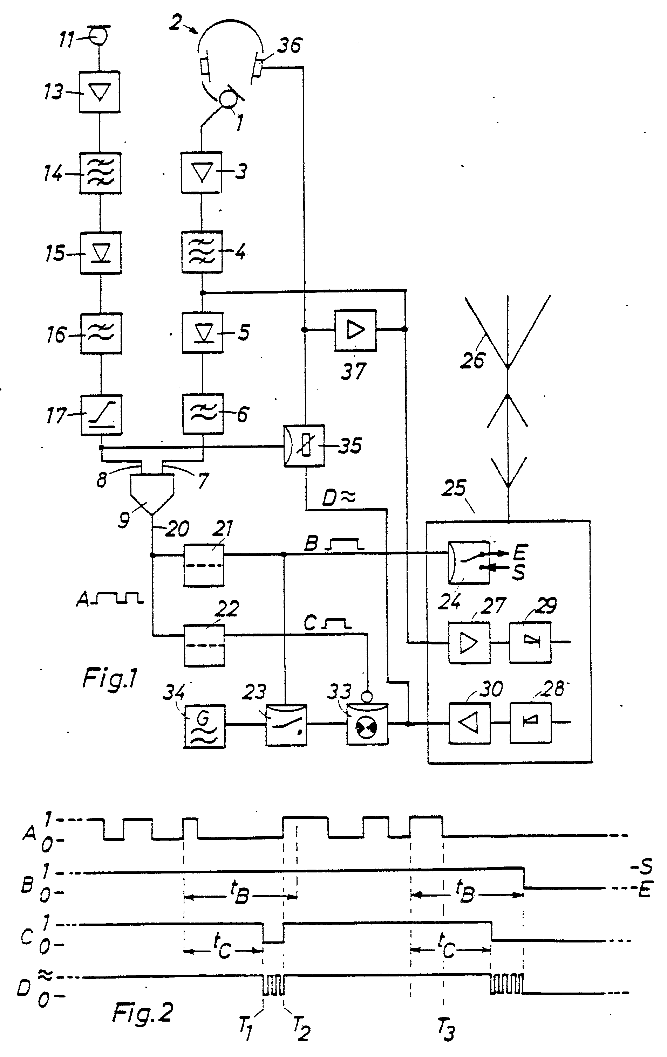

Nach Fig. 1 ist das Mikrofon 1 eines Kopfsprechhörers 2 über einen Mikrofonverstärker 3, einen Sprachfrequenzbandpass 4, einen Gleichrichter 5 und einen Tiefpass 6 an einen Eingang 7 eines zwei Eingänge 7 und 8 aufweisenden Komparators 9 angeschlossen. Ein zweites Mikrofon 11, das zur bevorzugten Aufnahme von Störschall angeordnet ist, ist entsprechend über einen Mikrofonverstärker 13, einen Sprachfrequenzbandpass 14, einen Gleichrichter 15 und einen Tiefpass 16 mit dem zweiten Eingang 8 des Komparators 9 verbunden, wobei diesem Eingang 8 noch ein Grösst- und Kleinstwert-Begrenzungsglied 17 vorgeschaltet ist.

Die Verstärkungsgrade der Mikrofonverstärker 3 und 13 sind bei den gegebenen Empfindlichkeiten der Mikrofone 1 und 11 so bemessen, dass die Spannungen an den Eingängen 7 und 8 des Komparators 9 einander annähernd gleich sind, wenn das Verhältnis der Schallstärke am Mikrofon 1 zur Schallstärke am Mikrofon 11 so gross ist, d. h. wenn so laut gesprochen wird, dass die Sprache trotz Störschall verständlich ist. Der Komparator 9 liefert ein Ausgangssignal, wenn und solange die Spannung am Eingang 7 die Spannung am Eingang 8 überschreitet.

Der Ausgang 20 des Komparators 9 ist mit dem Stelleingang zweier monostabiler Glieder 21 und 22 verbunden. Jedes dieser Glieder 21 und 22 ist aufflankengetriggert und nachtriggerbar, d. h. es wird durch die Anstiegsflanke eines Eingangsimpulses gesetzt flankengetriggert und kippt dann nach einer durch die Eigenschaften des Gliedes bestimmten Zeit in seinen Ruhezustand zurück. Treten während dieser Zeit jedoch ein oder mehrere weitere Eingangsimpulse auf, so kippt das Glied erst dann in den Ruhezustand zurück, wenn seit der Anstiegsflanke des letzten dieser Impulse die bestimmte Zeit abgelaufen ist (nachtriggerbar).

Das Ausgangssignal des monostabilen Gliedes 21 steuert einen im Ruhezustand offenen Ein-Aus-Schalter 23 und den im Ruhezustand auf « Empfang » (E) stehenden Sende-Empfangs-Umschalter 24 des Funksprechgerätes 25, von dem im übrigen nur die Antenne 26, der Modulator 27 und der Demodulator 28 sowie ein Tonfrequenzverstärker 29 zum Senden und in weiterer 30 zum Empfangen dargestellt sind.

Das Ausgangssignal des anderen monostabilen Gliedes 22 liegt am negierten Eingang eines im Ruhezustand geschlossenen, periodischen Unterbrechers 33. Der Ausgang eines Tonfrequenzgenerators 34 ist über den Schalter 23 und den Unterbrecher 33 mit dem Ausgang des Verstärkers 30 sowie an den Eingang eines Dämpfungsgliedes 35 angeschlossen. Das Dämpfungsglied 35 ist von der Spannung am Eingang 8 des Komparators 9 gesteuert, sein Ausgang ist mit dem Hörer 36 des Kopfsprechhörers 2 und über ein Uebertragungsglied 37 mit dem Sprechstromkreis (Verbindung zwischen dem Ausgang des Bandpasses 4 und dem Eingang des Verstärkers 29) verbunden. Das Glied 37 verhindert, dass der Sprechstrom zum Hörer 36 gelangt. Es kann (wie dargestellt) eine Verstärkerstufe sein, deren Verstärkung kleiner als Eins sein kann, damit das Tonfrequenzsignal von der Gegenstation zwar deutlich mitgehört wird, die Sprachübertragung aber nicht stört. Bei ausreichend hoher Spannung des Tonfrequenzsignals kann das Uebertragungsglied 37 auch ein Dämpfungsglied sein, dessen Dämpfung sowohl dem soeben genannten Zweck als auch dazu dient, die Uebertragung des Sprechstromes zum Hörer 36 ausreichend zu dämpfen. In diesem Fall ist es zweckmässig, das Uebertragungs- bzw. Dämpfungsglied nicht an dem Ausgang des Bandpasses 4 sondern an den Eingang oder z. B. zwischen der ersten und zweiten Stufe des Verstärkers 3 anzuschliessen, wo die Sprechspannung so niedrig ist, dass eine sehr hohe Dämpfung nötig wird, bei der praktisch kein Sprechstrom zum Hörer 36 gelangt.

Wenn die Spannung am Komparatoreingang 7 die am Eingang 8 überschreitet, d. h. wenn das für die Sprachverständlichkeit erforderliche Verhältnis der Sprechspannung zur Störspannung erreicht ist, setzt der Komparator 9 die beiden monostabilen Glieder 21 und 22. Dadurch wird der Umschalter 24 auf « Senden » (S) geschaltet und der Schalter 23 geschlossen, während der im Ruhezustand geschlossene periodische Unterbrecher 33, weil sein Eingang negiert ist, keine Unterbrechung bewirkt. Das Signal des Tonfrequenzgenerators 34 ist im Hörer 36 als Dauerton hörbar und zwar infolge des geregelten Dämpfungsgliedes 35 umso lauter, je grösser die Störschallstärke ist, so dass das Signal bei schwachem Störschall nicht störend und bei starkem Störschall deutlich hörbar ist. Dieses Signal wird zusammen mit dem Sprechstrom des Mikrofonverstärkers 3 auch an den Sendeverstärker 29 gegeben. Durch dieses Signal ist die Gegenstation auch in den Sprechpausen darüber informiert, ob die beschriebene Einrichtung auf « Senden » oder « Empfangen » steht.

Wie Fig. 2 zeigt, besteht das Ausgangssignal A des Komparators 9 aus Impulsen, deren Längen und Abstände dem Sprechrhythmus entsprechen.

Die monostabilen Glieder 21 und 22 werden durch die Anstiegsflanke jedes dieser Impulse A gesetzt (ihr Ausgangssignal B bzw. C wird 1), und sie kippen eine vorbestimmte Zeit $t_B$ bzw. $t_C$ nach der Anstiegsflanke des Impulses A, durch den sie gesetzt wurden, in den Ruhezustand (0) zurück. Solange Impulse A mit Impulsabständen, die kürzer als die vorbestimmte Zeit $T_B$ (bzw. $t_C$) sind, aufeinander folgen, bleibt das Glied 21 (bzw. 22) gesetzt B (bzw. C) = 1 es kippt erst dann in den Ruhezustand B (bzw. C) = 0 zurück, wenn nach der Anstiegsflanke eines Impulses A während der vorbestimmten Zeit $t_B$ (bzw. $t_C$) kein weiterer Impuls folgt. Diese Zeit $t_B$ ist für das Glied 21 etwas länger als die Dauer der üblicherweise vorkommenden Sprechpausen bemessen, z. B. $t_B$ = 2 sec., so dass dieses Glied 21 während des Sprechens nicht kippt, und der Sendezustand (S) aufrecht erhalten bleibt. Erst wenn das Signal A = 0 bleibt, nachdem seit der Anstiegsflanke eines Impulses die vorbestimmte Zeit $t_B$ abgelaufen ist, kippt das Glied 21 (Signal B wird 0) und schaltet dadurch den Umschalter 24 auf « Empfangen ». Bei dem Glied 22 ist diese Zeit $t_C$ etwas kürzer als beim Glied 21 bemessen, z. B. $t_C$ = 1,5 sec. Im Ruhezustand dieses Gliedes 22 ist der periodische Unterbrecher 33 in Betrieb, so dass der Signalton periodisch unterbrochen wird, um dem Benutzer anzuzeigen, dass die Einrichtung auf « Empfangen » umschaltet, wenn er nicht unverzüglich seine Durchsage fortsetzt bzw. lauter spricht. Tut er dies nicht rechtzeitig, so wird automatisch auf « Empfangen » (B wird 0) umgeschaltet, wobei der Schalter 23 den Signalton ausschaltet, woran der Benutzer erkennt, dass die Einrichtung nun auf « Empfangen » geschaltet ist. In Fig. 2 hat der Benutzer auf die im Zeitpunkt $T_1$ einsetzenden Unterbrechungen des Signaltons (D) vor Ablauf der Zeit $t_B$, nämlich im Zeitpunkt $T_2$ reagiert und seine Durchsage rechtzeitig (vor Ablauf der Zeit $t_B$) fortgesetzt, so dass der Sendezustand (S) erhalten blieb. Er hat die Durchsage dann im Zeitpunkt $T_3$ beendet, woraufhin die Einrichtung nach Ablauf der Zeit $t_B$ auf Empfangen (E) umschaltete.

Die Kleinstwertbegrenzung des Begrenzungsgliedes 17, z. B. eine Vorspannung am Komparatoreingang 8, verhindert, dass die Einrichtung bei einem sehr kleinen Störschallpegel durch Atemgeräusche oder durch eine Sprechlautstärke, die zwar genügend über dem Störschallpegel liegt, aber zur Verständigung nicht sicher ausreicht, auf « Senden » schalten kann. Die Grösstwertbegrenzung ermöglicht es, bei einem sehr hohen Störschallpegel, der durch den Sprachpegel kaum oder nicht hinreichend überschritten werden kann, noch eine Sprechverbindung herzustellen oder wenigstens zu versuchen. Zu diesem Zwecke kann beispielsweise eine (nicht dargestellte) Z-Diode am Eingang 8 des Komparators 9 liegen.

Die Tiefpässe 6 und 16 sind zweckmässig so ausgeführt, dass die Anstiegszeit ihres Ausgangssignals kürzer als dessen Abfallzeit und diese Anstiegszeit des Tiefpasses 16 (z. B. 11 ms) kürzer und dessen Abfallzeit (z. B. 1,5 s) länger als die des Tiefpasses 6 (33 ms bzw. 1 s) ist. Grundsätzlich könnte die in Fig. 1 durch das monostabile Glied 21 erzielte Ueberbrückung der Sprechpausen auch durch eine lange Abfallzeit des Ausgangssignals des Tiefpasses 6 erreicht werden, und auch die Wirkung beider monostabiler Glieder 21 und 22 durch vor den Eingang 8 des Komparators 9 angeordnete Schaltmittel erreicht werden. Dann wäre die Dauer der Aufrechterhaltung des Sendezustandes in den Sprechpausen sprachpegelabhängig infolge unterschiedlicher Aufladung der Tiefpasskondensatoren.

Die Bandpässe 4 und 14 bewirken, dass Störschallfrequenzen ausserhalb des Sprachfrequenzbereiches die Einrichtung nicht beeinflussen. Jedoch können diese Bandpässe zur Herabsetzung des Aufwandes auch weggelassen werden.

Anstelle des regelbaren Dämpfungsgliedes 35 kann, je nach den Spannungen bzw. Strömen am Ausgang des Tonfrequenzgenerators 34 und des Bandpasses 4 sowie der Empfindlichkeit des Hörers 36 ein regelbarer Verstärker erforderlich sein. In diesem Zusammenhang kann es auch zweckmässig sein, die Dämpfung des Dämpfungsgliedes 35 bzw. die Verstärkung eines an dessen Stelle vorgesehenen Verstärkers durch das Signal B beim Umschalten von « Empfangen » auf « Senden » und umgekehrt umzuschalten.

## Patentansprüche

1. Einrichtung zur Sprachübertragung mit einem überwiegend auf den Sprechschall ansprechenden, ersten Mikrofon (1) und einem überwiegend auf Störschall ansprechenden, zweiten Mikrofon (11), die je über eine Verstärkerstufe mit Gleichrichter und Tiefpass (3-6 ; 13-17) mit einer eine Vergleichsschaltung aufweisenden Schaltvorrichtung (9, 21-23) verbunden sind, die ein Schaltsignal (B) abgibt, solange die Schallstärke am ersten Mikrofon (1) in einem bestimmten Masse grösser ist als die Schallstärke am zweiten Mikrofon (11) und dieses Signal (B) noch während einer begrenzten Zeitdauer aufrechterhält, nachdem die Schallstärke am ersten Mikrofon (1) nicht mehr in dem bestimmten Masse grösser ist als die Schallstärke am zweiten Mikrofon (11), gekennzeichnet durch eine von der Schaltvorrichtung (9, 21-23) geschaltete Anzeigevorrichtung, die ein akustisches oder optisches Signal in Abhängigkeit davon abgibt, ob die Schallstärke am ersten Mikrofon (1) in einem für die Sprachverständlichkeit ausreichenden Masse grösser ist als die Schallstärke am zweiten Mikrofon (11), und ein Mittel (33) zur Aenderung des Charakters des akustischen oder optischen Signals oder zur Abgabe eines anderen Signals hat, welches durch die Schaltvorrichtung (9, 21-23) innerhalb der begrenzten Zeitdauer ausgelöst wird.

2. Einrichtung nach Anspruch 1, dadurch gekennzeichnet, dass die Schaltvorrichtung (9, 21-23) zwei nachtriggerbare Verzögerungsglieder (21, 22) aufweist, deren erstes (21) die begrenzte Zeitdauer und deren zweites eine kürzere Zeitdauer bestimmt, nach deren Ablauf die Schaltvorrichtung (9, 21-23) das Mittel (33) zur Aenderung des Signalcharakters oder Abgabe eines anderen Signals auslöst.

3. Einrichtung nach Anspruch 1 oder 2, wobei die Schaltvorrichtung (9, 21-23) mit einem im Sprechkanal der Einrichtung liegenden und diese während der Dauer des Schaltsignals (B) auf Sprechen schaltenden Schaltglied (24) verbunden ist, dadurch gekennzeichnet, dass das Schaltglied (24) die Einrichtung nach Ablauf des Schaltsignals (B) jeweils auf Hören umschaltet, so dass die Einrichtung als Wechselsprecheinrichtung arbeitet.

4. Einrichtung nach einem oder mehreren der Ansprüche 1 bis 3, dadurch gekennzeichnet, dass die Verstärkungsgrade der Mikrofonverstärker (3, 13) bei den gegebenen Empfindlichkeiten der Mikrofone (1, 11) so bemessen sind, dass die Eingangsspannungen bzw. -ströme der Vergleichsschaltung (9) bei einem bestimmten, für die Sprachverständlichkeit ausreichenden Verhältnis der Schallstärke am ersten Mikrofon (1) zur Schallstärke am zweiten Mikrofon (11) annähernd gleich sind, und dass die Vergleichsschaltung (9) ein das Schaltsignal (B) auslösendes Ausgangssignal (A) abgibt, wenn die Spannung bzw. der Strom am dem ersten Mikrofon (1) zugeordneten Eingang (7) die Spannung bzw. der Strom am dem zweiten Mikrofon (11) zugeordneten Komparatoreneingang (8) überschreitet.

5. Einrichtung nach einem oder mehreren der Ansprüche 1 bis 4, dadurch gekennzeichnet, dass am Ausgang der Tiefpässe (6, 16) die Signalanstiegszeit kürzer als die Signalabfallzeit und beim dem zweiten Mikrofon (11) zugeordneten Tiefpass (16) die Anstiegszeit kürzer und die Abfallzeit länger als beim dem ersten Mikrofon (1) zugeordneten Tiefpass (6) ist.

6. Einrichtung nach einem oder mehreren der Ansprüche 1 bis 6, dadurch gekennzeichnet, dass an dem dem zweiten Mikrofon (11) zugeordneten Eingang (8) der Vergleichsschaltung (9) ein Grösst- und Kleinstwertbegrenzungsglied (17) liegt.

7. Einrichtung nach einem oder mehreren der Ansprüche 1 bis 6, dadurch gekennzeichnet, dass die Anzeigevorrichtung (33-36) einen Tonfrequenzgenerator (34) hat, dessen Tonsignal (D) dem Hörer (36) bzw. Lautsprecher der Einrichtung zugeführt und dem Sprechstrom überlagert wird.

8. Einrichtung nach einem oder mehreren der Ansprüche 1 bis 7, dadurch gekennzeichnet, dass ein im Stromkreis des Hörers (36) bzw. Lautsprechers liegendes, verstärkendes oder dämpfendes Glied (35) von der Ausgangsspannung des dem zweiten Mikrofon (11) zugeordneten Tiefpasses (16) so gesteuert ist, dass die Lautstärke des Hörers (36) bei zunehmender Störschallstärke zunimmt und bei abnehmender Störschallstärke abnimmt.

9. Einrichtung zur Sprachübertragung mit einem überwiegend auf den Sprechschall ansprechenden, ersten Mikrofon (1) und einem überwiegend auf Störschall ansprechenden, zweiten Mikrofon (11), die je über eine Verstärkerstufe mit Gleichrichter und Tiefpass (3-6 ; 13-17) mit einer eine Vergleichsschaltung aufweisenden Schaltvorrichtung (9, 21-23) verbunden sind, die ein Schaltsignal (B) abgibt, solange die Schallstärke am ersten Mikrofon (1) in einem bestimmten Masse grösser ist als die Schallstärke am zweiten Mikrofon (11) und dieses Signal (B) noch während einer begrenzten Zeitdauer aufrechterhält, nachdem die Schallstärke am ersten Mikrofon (1) nicht mehr in dem bestimmen Masse grösser ist als die Schallstärke am zweiten Mikrofon (11), gekennzeichnet durch einen von der Schaltvorrichtung (9, 21-23) geschalteten Tonsignalgeber (33-36), der ein Tonsignal (D) in Abhängigkeit davon an den Hörer (36) bzw. Lautsprecher der Einrichtung abgibt, ob die Schallstärke am ersten Mikrofon (1) in einem für die Sprachverständlichkeit ausreichenden Masse grösser ist als die Schallstärke am zweiten Mikrofon (11), und ein im Stromkreis des Hörers (36) bzw. Lautsprechers liegendes, verstärkendes oder dämpfendes Glied (35), das von der Ausgangsspannung des dem zweiten Mikrofon (11) zugeordneten Tiefpasses (16) so gesteuert ist, dass die Lautstärke des Hörers (36) bzw. Lautsprechers bei zunehmender Störschallstärke zunimmt und bei abnehmender Störschallstärke abnimmt.

## Claims

1. Arrangement for speech transmission, comprising a first microphone (1) responding predominantly to speech sound and a second microphone (11) responding predominantly to interference sound, each of the said microphones being connected by an amplifier stage comprising a rectifier and a low-pass filter (3-6 ; 13-17) to a switching device (9, 21-23) comprising a comparator circuit and which gives out a switching signal (B) as long as the sound intensity at the first microphone (1) is greater by a specific amount than the sound intensity at the second microphone (11), maintaining this signal (B) for a limited duration of time once the sound intensity at the first microphone (1) is no longer greater by the specific amount than the sound intensity at the second microphone (11), characterised by a display device switched by the switching device (21-23) and which gives out an acoustic or a visual signal according to whether the sound intensity at the first microphone (1) is greater by an amount sufficient for speech comprehension than the sound intensity at the second microphone (11), and a means (33) for varying the character of the acoustic or visual signal or for giving out another signal which is triggered by the switching device (9, 21-23) within the limited period of time.

2. Arrangement according to Claim 1, characterised in that the switching device (9, 21-23) comprises two subsequently triggerable delay members (21, 22) of which the first (21) determines the limited period of time while the second determines a shorter period of time upon expiry of which the switching device (9, 21-23) triggers the means (33) of varying the signal character or of giving out another signal.

3. Arrangement according to Claim 1 or 2, the switching device (9, 21-23) being connected to a switching member (24) located in the speech channel of the arrangement and switching this to Speech for the duration of the switching signal (B), characterised in that the switching member (24) switches the arrangement over to Listen upon expiry of the switching signal (B), so that the arrangement operates as a two-way communications unit.

4. Arrangement according to one or more of Claims 1 to 3, characterised in that the degree of amplification of the microphone amplifiers (3, 13) for the given sensitivities of the microphones (1, 11) are so dimensioned that the input voltages or currents of the comparator circuit (9) are for a specific proportion of sound intensity at the first microphone (1) to the sound intensity at the second microphone (11) which is adequate for speech comprehension are approximately the same, and in that the comparator circuit (9) gives out an output signal (A) which triggers the switching signal (B) when the voltage or the current at the input (7) associated with the first microphone (1) exceeds the voltage or the current at the comparator input (8) associated with the second microphone (11).

5. Arrangement according to one or more of Claims 1 to 4, characterised in that at the output of the low-pass filters (6, 16), the signal rise time is shorter than the signal fall time and in the case of the low-pass filter (16) associated with the second microphone (11), the rise time is shorter and the fall time longer than in the case of the low-pass filter (6) associated with the first microphone (1).

6. Arrangement according to one or more of Claims 1 to 6, characterised in that at the input (8) of the comparator circuit (9) which is associated with the second microphone (11), there is a maximum and minimum limiting member (17).

7. Arrangement according to one or more of Claims 1 to 6, characterised in that the display device (33-36) comprises an audiofrequency generator (34), of which the audio signal (D) is fed to the earpiece (36) or loudspeaker of the arrangement and is superimposed upon the speech current.

8. Arrangement according to one or more of Claims 1 to 7, characterised in that an amplifying or damping member (35) located in the circuit of the earpiece (34) or loudspeaker is so controlled by the output voltage of the low-pass filter (16) associated with the second microphone (11) that the volume of the earpiece (36) increases with increasing interference sound intensity and diminishes with reducing interference sound intensity.

9. Arrangement for speech transmission, comprising a first microphone (1) responding predominantly to speech sound and a second microphone (11) responding predominantly to interference sound, the microphone being connected by respective amplifier stages comprising rectifiers and low-pass filters (3-6 ; 13-17) to a switching device (9, 21-23) comprising a comparator circuit and giving out a switching signal (B) as long as the sound intensity at the first microphone (1) is greater by a specific degree than the sound intensity at the second microphone (11) and maintains this signal (B) for a limited period of time after the sound intensity at the first microphone (1) no longer exceeds by the specific degree the sound intensity at the second microphone (11), characterised by an audio signal transmitter (33-36) switched by the switching device (9, 21-23) and which gives an audio signal (D) to the earpiece (36) or loudspeaker of the arrangement as a function of whether the sound intensity at the first microphone (1) is greater by a degree sufficient for speech comprehension than the sound intensity at the second microphone (11), and an amplifying or damping member (35) located in the circuit of the earpiece (36) or loudspeaker and which is so controlled by the output voltage of the low-pass filter (16) associated with the second microphone (11) that the volume of the earpiece (36) or loudspeaker increases with increasing interference sound intensity and diminishes with reducing interference sound intensity.

**Revendications**

1. Dispositif de transmission téléphonique comprenant un premier microphone (1) répondant de façon prépondérante au bruit vocal et un second microphone (11) répondant de façon prépondérante à un bruit parasite, qui sont chacun reliés par l'intermédiaire d'un étage amplificateur à redresseur et filtre passe-bas (3-6 ; 13-17) à un dispositif de commutation (9, 21-23) comprenant un circuit comparateur, le dispositif de commutation émettant un signal de commutation (B) tant que l'intensité sonore au niveau du premier microphone (1) est supérieure d'une valeur déterminée à l'intensité sonore au niveau du second microphone (11) et maintient ce signal (B) pendant une durée limitée après que l'intensité sonore au niveau du premier microphone (1) n'est plus supérieure de la valeur déterminée à l'intensité sonore au niveau du second microphone (11), caractérisé par un dispositif avertisseur commuté par le dispositif de commutation (9 ; 21-23) qui émet un signal acoustique ou optique selon que l'intensité sonore au niveau du premier microphone (1) est supérieure d'une valeur suffisante pour la compréhension de la conversation à l'intensité sonore au niveau du second microphone (11), et comprend un moyen (23) pour modifier le caractère du signal acoustique ou optique, ou pour émettre un autre signal, qui est déclenché par le dispositif de commutation (9 ; 21-23) à l'intérieur de la durée limitée.

2. Dispositif selon la revendication 1, caractérisé en ce que le dispositif de commutation (9 ; 21-23) comprend deux organes à retard (21, 22) pouvant être déclenchés, dont le premier (21) détermine la durée limitée et dont le second détermine une durée plus courte, après l'écoulement desquelles le dispositif de commutation (9 ; 21-23) déclenche le moyen (33) qui modifie le caractère du signal ou l'émission d'un autre signal.

3. Dispositif selon la revendication 1 ou 2, dans lequel le dispositif de commutation (9 ; 21-23) est relié à un organe de commutation (24) disposé dans le canal vocal du dispositif et commutant ce dernier sur la parole pendant la durée du signal de commutation (B), caractérisé en ce que l'organe de commutation (24) commute le dispositif après écoulement du signal de commutation (B) sur l'écoute de manière que le dispositif fonctionne comme un dispositif d'intercommunication.

4. Dispositif selon l'une ou plusieurs des revendications 1 à 3, caractérisé en ce que les degrés d'amplification des amplificateurs de microphones (3, 13) sont déterminés pour les sensibilités données des microphones (1, 11) de manière que les tensions ou les courants d'entrée du circuit comparateur (9) soient approximativement les mêmes pour un rapport déterminé et suffisant pour la compréhension de la conversation entre l'intensité sonore au niveau du premier microphone (1) et l'intensité sonore au niveau du second microphone (11), et en ce que le circuit comparateur (9) émet un signal de sortie (A) qui déclenche le signal de commutation (B) quand la tension ou le courant à l'entrée (7) qui est associée au premier microphone (1) dépasse la tension ou le courant à l'entrée du comparateur (8) associé au second microphone (11).

5. Dispositif selon une ou plusieurs des revendications 1 à 4, caractérisé en ce qu'à la sortie du filtre passe-bas (6, 16), la durée de montée du signal est plus courte que la durée de descente du signal et que pour le filtre passe-bas (16) associé au second microphone (11), la durée de montée est plus courte et la durée de descente plus longue que pour le filtre passe-bas (6) associé au premier microphone (1).

6. Dispositif selon une ou plusieurs des revendications 1 à 5, caractérisé en ce qu'un organe limiteur à valeur maximale et valeur minimale (17) est monté à l'entrée (8) du circuit comparateur (9) qui est associé au second microphone (11).

7. Dispositif selon une ou plusieurs des revendications 1 à 6, caractérisé en ce que le dispositif avertisseur (33-36) comprend un générateur à fréquences vocales (34) dont le signal sonore (D) est appliqué à l'écouteur (36) ou au haut-parleur du dispositif et est superposé au courant téléphonique.

8. Dispositif selon une ou plusieurs des revendications 1 à 7, caractérisé en ce qu'un organe amplificateur ou avertisseur (35) monté dans le circuit du courant de l'écouteur (36) ou du haut-parleur est commandé par la tension de sortie du filtre passe-bas (16) associé au second microphone (11) de manière que l'intensité sonore de l'écouteur (36) augmente quand l'amplitude du bruit parasite augmente et diminue quand l'amplitude du bruit parasite diminue.

9. Dispositif de transmission téléphonique comprenant un premier microphone (1) répondant de façon prépondérante au bruit vocal et un second microphone (11) répondant de façon prépondérante à un bruit parasite, qui sont chacun reliés par l'intermédiaire d'un étage amplificateur à redresseur et filtre passe-bas (3-6 ; 13-17) à un dispositif de commutation (9, 21-23) comprenant un circuit comparateur, le dispositif de commutation émettant un signal de commutation (B) tant que l'intensité sonore au niveau du premier microphone (1) est supérieure d'une valeur déterminée à l'intensité sonore au niveau du second microphone (11) et maintient ce signal (B) pendant une durée limitée après que l'intensité sonore au niveau du premier microphone (1) n'est plus supérieure de la valeur déterminée à l'intensité sonore au niveau du second microphone (11), caractérisé par un générateur de signal sonore (33-36) commuté par le dispositif de commutation (9, 21-23), qui applique un signal sonore (D) en fonction de ce dernier à l'écouteur (36) ou au haut-parleur du dispositif si l'intensité sonore au niveau du premier microphone (1) est plus élevée d'une valeur suffisante pour la compréhension de la conversation que l'intensité sonore au niveau du second microphone (11), et un organe amplificateur ou atténuateur (35) monté dans le circuit du courant de l'écouteur (36) ou du haut-parleur, qui est commandé par la tension de sortie du filtre passe-bas (16) associé au second microphone (11) de manière que l'intensité sonore de l'écouteur (36) ou du haut-parleur augmente quand l'intensité sonore parasite augmente et diminue quand l'intensité sonore parasite diminue.

Fig.1

Fig.2